Europäisches Patentamt

European Patent Office

Office européen des brevets

(19)

(11) Veröffentlichungsnummer: **0 353 608**
**A2**

# (12) EUROPÄISCHE PATENTANMELDUNG

(21) Anmeldenummer: 89113755.6

(22) Anmeldetag: 26.07.89

(51) Int. Cl.⁴: **B32B 7/04 , B32B 27/08**

(30) Priorität: 03.08.88 DE 3826318

(43) Veröffentlichungstag der Anmeldung:
07.02.90 Patentblatt 90/06

(84) Benannte Vertragsstaaten:
AT BE CH DE FR GB IT LI LU NL SE

(71) Anmelder: HOECHST AKTIENGESELLSCHAFT
Postfach 80 03 20
D-6230 Frankfurt am Main 80(DE)

(72) Erfinder: Dinter, Peter
Am Wiesenberg 4
D-6227 Oestrich-Winkel(DE)
Erfinder: Spross, Bernd
Drosselweg 2a
D-6204 Taunusstein 2(DE)

(54) Hochfester plattenförmiger Körper mit Oberflächenstruktur.

(57) Der hochfeste plattenförmige Körper ist aus einer Vielzahl von übereinanderliegenden, miteinander fest verbundenen Folien aus thermoplastischem Kunststoff aufgebaut. Zumindest eine Oberfläche des Körpers weist eine Vielzahl von einzelnen Erhebungen auf, wobei der Körper in diesen Bereichen dieser Oberfläche eine größere Dicke besitzt und die einzelnen Folien in diesen Bereichen nicht miteinander verbunden sind.

EP 0 353 608 A2

# Hochfester plattenförmiger Körper mit Oberflächenstruktur

Die Erfindung bezieht sich auf einen hochfesten plattenförmigen Körper von der im Oberbegriff des Anspruchs 1 genannten Art, auf ein Verfahren zu seiner Herstellung und die Verwendung von Kunststoffolien zur Herstellung solcher plattenförmiger Körper.

Folien und plattenförmige Körper zählen zu den wichtigsten Formen, in denen Kunststoffe als Halbzeug hergestellt werden. Während bei der Folienherstellung die mono- oder biaxiale Verstreckung zur Verbesserung der mechanischen Eigenschaften großtechnisch genutzt wird, wird bei der Plattenfertigung von der Verstreckung so gut wie gar nicht Gebrauch gemacht. Ausschlaggebend hierfür sind die mit der Plattendicke in direktem Zusammenhang stehenden Schwierigkeiten, einerseits die mit zunehmender Substratdicke ansteigenden Streckkräfte mechanisch in den Streckwerkzeugen zu beherrschen und andererseits die für eine gleichmäßige Verstreckung notwendige, homogene Durchwärmung der Platten zu gewährleisten. Vom Markt her besteht aber durchaus großer Bedarf an hochfesten Kunststoffplatten.

Einen Beitrag zur Lösung dieses Problems liefert das in der EP-A-0 207 047 beschriebene Verfahren, das die Herstellung hochfester Platten mit hoher Reißfestigkeit durch thermische Verpressung einer Vielzahl von biaxial verstreckten, coextrudierten Kunststoffolien vorsieht.

Die erhaltenen Platten sind in sich homogen und zeigen glatte Oberflächen.

Ausgehend von diesem Stand der Technik liegt der vorliegenden Erfindung die Aufgabe zugrunde, den bekannten hochfesten plattenförmigen Körper aus thermisch verpreßten Folien mit wenigstens einer strukturierten, dekorativen Oberfläche zu versehen, wobei die guten mechanischen Eigenschaften erhalten bleiben müssen, und ein Verfahren zu seiner Herstellung anzugeben. Eine weitere Aufgabe der Erfindung liegt darin, für dieses Verfahren besonders geeignete Folien aufzufinden.

Gelöst wird diese Aufgabe erfindungsgemäß durch den plattenförmigen Körper mit den in Anspruch 1 genannten Merkmalen. Unter einem plattenförmigen Körper ist eine Platte zu verstehen, deren Breite und Länge relativ groß ist im Verhältnis zu ihrer Dicke. Die beiden durch die Breite und Länge der Platte definierten Oberflächen erstrecken sich parallel zueinander und verlaufen plan oder besitzen gebogene, z.B. gewellte oder gewinkelte Form. Auf wenigstens einer dieser beiden Oberflächen befindet sich eine Vielzahl von einzelnen Erhebungen, diese bilden die profilierte Oberflächenstruktur und bestehen aus unverpreßten Teilbereichen, in denen die einzelnen übereinanderliegenden Folien nicht miteinander verbunden sind. Voraussetzung für die mechanische Festigkeit ist allerdings, daß sich diese unverpreßten Teilflächen nicht durchgehend von einem Rand des plattenförmigen Körpers zum anderen Rand erstrecken. Die Platte würde dann in diesem Bereich durchknicken. Wenn deshalb die unverpreßten Teilflächen die Form von Linien oder Streifen aufweisen, muß ihre Länge erheblich kürzer sein als die Breite bzw. Länge der Platte, d.h. jede linien- oder streifenförmige unverpreßte Teilfläche sollte sich maximal über etwa 70 %, insbesondere 50 % der Plattenbreite erstrecken. Die Flächenform der unverpreßten Teilflächen und ihr gegenseitiger Abstand ist an sich beliebig, solange die Festigkeit der Platte nicht zu stark verringert wird. In bevorzugter Ausführungsform sind die unverpreßten Teilflächen kreis- oder ellipsenförmig, oder zeigen rechteckige Form, die entsprechenden Erhebungen zeigen dann die Form von Kugelsegmenten oder einer Kissenhälfte, die sich aus der Oberfläche des plattenförmigen Körpers herauswölben.

Auch das Verhältnis der gesamten unverpreßten Fläche zur jeweiligen gesamten Fläche des Körpers ist für dessen mechanische Stabilität und Steifigkeit wesentlich. Der Anteil der unverpreßten Flächenbereiche, d.h. die Flächenbereiche, in denen sich die Erhebungen aus der Plattenoberfläche herauswölben, an der gesamten jeweiligen Oberfläche sollte kleiner sein als 70, insbesondere gleich/kleiner als etwa 60 % sein, bezogen auf die gesamte Oberfläche, auf der sich diese Flächenbereiche befinden. Setzt man für den Quotienten aus verpreßter Gesamtfläche zu unverpreßter Gesamtfläche einen Faktor v, so sollte für v als unterster Wert 0,7 nicht unterschritten werden, wobei die einzelnen unverpreßten Bereiche selbst eine möglichst geringe Fläche, vorzugsweise maximal 0,25 bis 1 cm$^2$ überdecken und einen gegenseitigen Mindestabstand von 2 mm einhalten sollten. Quadratische oder kreisförmige unverpreßte Bereiche sollten einen Durchmesser bzw. Kantenlänge von größer als die halbe Breite des Körpers nicht überschreiten, da sonst die Festigkeit des Körpers zu stark reduziert wird.

Die Dicke der Platte hängt ab von dem vorgesehenen Anwendungszweck. Sie kann beispielsweise eine Dicke von kleiner als 1, insbesondere bis zu 0,3 mm zeigen, sofern ihre Festigkeit ausreichend ist. Die obere Dicke wird durch die Herstellungsbedingungen begrenzt, da dann entsprechend dickere Folienstapel in der Hitze verpreßt werden müssen. Dies erfordert z.B. längere Aufheizzeiten. Es hat sich jedoch gezeigt, daß selbst Platten von 30 bis 50 mm Dicke noch herstellbar sind.

Gelöst wird diese Aufgabe ferner durch das Verfahren mit den Verfahrensschritten des Anspruchs 6. Hierbei werden die zu verpressenden, biaxial verstreckten, im Coextrusionsverfahren auf mindestens einer Seite mit einer Heißsiegelschicht ausgerüsteten Kunststoffolien zu einem Stapel geschichtet. Die einzelnen Folien werden hinsichtlich ihrer durch Verstreckung erzielten Orientierung parallel oder jeweils zur benachbarten Folie verdreht übereinander angeordnet. Der erhaltene Folienstapel wird mit einer geeigneten Prägepresse zwischen zwei Preßstempeln bei erhöhter Temperatur par tiell, d.h. in Teilflächen verpreßt, wobei zumindest einer der Preßstempel mit einer entsprechend strukturierten Preßmatrize bestückt ist. Diese Preßmatrize oder Preßform besitzt entsprechend der gewünschten Zahl an Erhebungen, die erzeugt werden sollen, eine entsprechende Zahl von Ausnehmungen, in deren Bereich beim thermischen Verpressen praktisch kein Druck auf den Folienstapel ausgeübt wird und in welche der Folienstapel unter Bildung von Erhebungen ausweicht.

Die Preßtemperatur liegt im Bereich oberhalb der Kristallitschmelztemperatur bzw. Glasumwandlungstemperatur des die Heißsiegelschicht bildenden thermoplastischen Polymeren und unterhalb der entsprechenden Temperatur der die Basisschicht bildenden thermoplastischen Polymeren, im allgemeinen bei 130 bis 150°C bei Polypropylenfolien. Beim Erreichen der Preßtemperatur beginnt die Heißsiegelschicht der Folien klebrig zu werden, während die durch Streckung erlangte Orientierung der Basisschicht bei dieser Temperatur noch erhalten bleibt. Der Druck sollte mindestens 10 bar betragen und wird in der Praxis 50 bar nicht überschreiten. Die Einwirkungszeit für den Preßdruck hängt ab von der Dicke der einzelnen Folien, der Dicke des Folienstapels und der Wärmeleitfähigkeit der Folien und beträgt zwischen wenigen Sekunden bis zu einer halben Stunde oder länger. Die erforderliche Zahl der übereinanderliegenden Folien hängt ab von der Foliendicke und der angestrebten Dicke der Platte.

Außer der Strukturgebung durch die Teilverpressung des Folienstapels besteht noch die Möglichkeit, der Oberfläche des plattenförmigen Körpers im verpreßten ereich eine Feinstruktur, z.B. eine erhöhte Rauhigkeit oder Prägung zu verleihen. Zusätzlich oder alternativ kann auch noch der gesamte Folienstapel verformt erden, so daß z.B. eine Platte mit gewellter Form resultiert.

Die Vorteile des erfindungsgemäßen partiellen Verpressens des Folienstapels zu einem hochfesten Formkörper sind in folgenden Punkten zu sehen. Im Bereich der unverpreßten Flächen erhält der plattenförmige Körper reliefartige, nach außen gewölbte Oberflächenbereiche, die aufgrund ihrer veränderten Lichtdurchlässigkeit und ihres erhöhten Glanzes dem Körper in dekoratives Muster verleihen. Diese Erhebungen besitzen zusätzlich funktionellen Charakter, in dem sie z.B. die Rutschfestigkeit der Oberfläche verbessern und das Reflektionsverhalten verändern.

Die obengenannte Aufgabe der Erfindung wird ferner gelöst durch die Verwendung der in Anspruch 8 genannten opaken Folie bei der Herstellung des plattenförmigen Körpers. Beim Verpressen eines Folienstapels aus opaken Folien, deren Opazität aus Füllstoffteilchen, Partikel oder Pigmenten resultiert, werden besonders interessante Effekte erzielt. Dieser Effekt ist besonders eindrucksvoll, wenn die Folie noch zusätzlich Vakuolen enthält, die bei der Streckung der mit den Teilchen rezepturier ten Basisschicht entstehen. Verpreßt man derartige Folien in Teilbereichen, werden die Vakuolen dort infolge der Kompaktierung der Polymermatrix beseitigt. Die Opazität wird in den gepreßten Bereichen deutlich geringer, die Folie wird dort partiell durchscheinend und matt. Der erfindungsgemäß nur partiell verpreßte Verbundkörper aus opaken Folien mit poriger Struktur zeichnet sich dadurch aus, daß er aus verpreßten, matten, transluzenten Bereichen sowie opaken, perlmuttartig glänzenden, unverpreßten Bereichen besteht, in denen die porige Struktur der übereinanderliegenden Folien erhalten geblieben ist. Die opaken Bereiche heben sich zudem gegenüber dem komprimierten Umfeld durch eine deutlich größere Dicke ab, so daß ein reliefartiges Oberflächenprofil entsteht.

Ein weiterer erheblicher Vorteil der partiellen Verpressung ergibt sich hinsichtlich der Bruchmechanik des erhaltenen Körpers. Bezüglich der Rißausbreitung in homogenen Materialien ist es bekannt, daß zur Aufrechterhaltung eines Schädigungsvorganges, z.B. zum Weiterreißen eines bereits vorhandenen Einrisses, im allgemeinen eine geringere Kraft erforderlich ist im Vergleich zu der Kraft, die zur Einleitung der Schädigung, d.h. zum Einreißen, benötigt wird. Als wirkungsvolle Maßnahme zur Überwindung dieses Verhaltens hat sich im vorliegenden Fall der Einbau von die Rißbildung unterbrechenden Störstellen in Form der nicht verpreßten Bereiche im erfindungsgemäßen Körper bewährt, wodurch dessen Verhalten bei Einwirkung von Stoß- und Schlag energie eine deutliche Verbesserung erfährt, insbesondere wird die Gefahr einer Rißausbreitung deutlich verringert.

Geeignet zur Herstellung des erfindungsgemäßen vielschichtigen Körpers sind biaxial, d.h. in Längs- und Querrichtung durch Streckung orientierte Folien aus thermoplastischem Kunststoff. Die Folien umfassen eine Basisschicht und mindestens eine äußere Deckschicht aus heißsiegelfähigem Material, die gemeinsam extrudiert sind. Besonders geeignet sind Folien mit einer Basisschicht aus einem thermoplastischen Kunststoff aus der Gruppe der Polyester und der Polyolefine. Die Polyesterfolien sind gewöhnlich im Verhältnis 1 : 2,5 bis 1 : 3,5 in beiden Richtungen streckorientiert, die Polyolefinfolien, insbesondere auf Basis von Polypropylen, sind gewöhnlich in Längsrichtung im Verhältnis 1 : 3 bis 1 : 6 und in Querrichtung im Verhältnis 1 : 8 bis 1 : 12 streckorientiert. Die vorgenannten Polymere können durch anorganische oder organische Additive im Hinblick auf ihre Gebrauchseigenschaften rezepturiert sein.

Unter Polyester sind Polyester-Homo- und Copolymere, Gemische verschiedener Polyester sowie Abmischungen von Polyestern mit anderen Polymeren zu verstehen.

Beispiele für Polyester sind Mono- oder Polykondensate aus Terephthalsäure, Isophthalsäure und/oder 2,6-Naphthalindicarbonsäure mit Glykolen mit 2 bis 10 Kohlenstoffatomen wie Polyethylenterephthalat, Polytetramethylenterephthalat, Polybutylenterephthalat, Poly-1,4-cyclohexylen-dimethylenterepthalat, Polyethylen-2,6-naphthalindicarboxylat oder Polyethylen-p-hydroxybenzoat.

Die Copolyester können als Bausteine auch Adipinsäure, Sebazinsäure, Phthalsäure, Isophthalsäure, 5-Na-sulfoisophthalat, polyfunktionelle Komponenten wie Trimelithsäure u.a. enthalten.

Die Polyestergemische können beispielsweise aus Polyethylenterephthalat und Polybutylenterephthalat oder Polyethylenterephthalat und wenigstens einem Alkalimetallsalz eines Derivats der Sulfonsäure, wie z.B. der Sulfoisophthalsäure, bestehen.

Beispiele für Polymere, die in den Polyester eingearbeitet oder eingemischt werden können, sind PolyolefinHomo- oder Copolymere wie Polyethylen, Polypropylen, Poly-4-methylpenten, Ethylen-Vinylacetat-Copolymere, die ihrerseits verseift sein können und Ionomere, ferner Polyamide, Polycarbonate, Polytetrafluorethylen, Polysulfone u.a.

Als Polyolefine sind für die Basisschicht Homopolymere, Copolymere oder Terpolymere von alpha-Olefinen mit 2 bis 6 C-Atomen oder deren Mischungen geeignet, insbesondere Propylenhomopolymere oder Propylenmischpolymere mit Ethylen und/oder alpha-Olefinen mit 4 bis 6 C-Atomen.

Der Anteil des Propylenhomopolymeren beträgt vorzugsweise mindestens 80 Gew.-%, insbesondere mindestens 90 Gew.-%, bezogen auf die Polymermischung.

Als Heißsiegelschichten können die üblicherweise zu diesem Zweck bei der Folienherstellung eingesetzten Beschichtungen verwendet werden. Dies sind bei Basisschichten aus Polyolefinen bevorzugt statistische Co-oder Terpolymere von alpha-Olefinen mit 2, 3 und/oder 4 C-Atomen, bei Basisschichten aus Polyester vorzugsweise Copolyester, enthaltend Ethylen-, Terephthalatund Isophthalat-Einheiten.

Werden opake Folien zur Herstellung des plattenförmigen Körpers eingesetzt, so enthält die Basisschicht, gegebenenfalls auch die Deckschichten, inerte Zusatzmittel in Form von fein verteilten Partikeln. Der Gehalt an diesen Partikeln liegt gewöhnlich im Bereich von 1 bis 25, insbesondere 5 bis 15 Gew.-%, bezogen auf das Foliengewicht. Die mittlere Partikelgröße ist 0,03 bis 4, insbesondere 0,3 bis 1 Mikrometer.

Das inerte Zusatzmittel besteht aus pulverförmigen anorganischen Feststoffteilchen, vorzugsweise aus Carbonaten, insbesondere der Alkali- und Erdalkalimetalle wie Calciumcarbonat (Kreide), Sulfaten wie Bariumsulfat und/oder Oxiden wie anorganischen Siliciumverbindungen, insbesondere Magnesiumsilikat (Talkum), Na-Al-silikat, Siliciumdioxid und Glas oder Titandioxid oder aus Mischungen dieser Verbindungen. Diese werden in Form von feinen Teilchen, z. B. als Pulver oder Pigmente, in die die Basisschicht bildende Kunststoffschmelze beim Extrudieren der Folie eingearbeitet und darin dispergiert. Besonders vorteilhaft werden die inerten Teilchen und die anderen Additive mit Masterbatch-Technik in die Basisschicht eingearbeitet.

In einer anderen Ausführungsform besteht das inerte Zusatzmittel aus organischen Kunststoffteilchen, die mit den Polymeren der Basisschicht und der Deckschichten unverträglich sind und einen höheren Schmelzpunkt aufweisen. Zu diesen Polymeren gehören Styrol- und Acryl-Polymere, insbesondere Polystyrol und Polymethylmethacrylat, fluorierte Kohlenwasserstoffpolymere und Polyamide.

In bevorzugter Ausführungsform besitzt die Basisschicht eine porige Struktur. Dadurch zeigt die Folie eine Dichte, die geringer ist als die rein rechnerische Dichte aufgrund der verwendeten Mischung aus dem Kunststoff der Basisschicht und den inerten Teilchen. Insbesondere beträgt ihre Dichte 0,50 bis 0,85 g/cm³. Bei höherer Dichte ist die Festigkeit der Folie zwar größer, doch ist bei zunehmender Zahl an Vakuolen, d.h. bei niedrigerer Dichte, eine bessere Prägbarkeit feststellbar. Die porige Struktur ergibt sich aufgrund von Mikrorissen, Leerstellen, Mikrohohlräumen oder Vakuolen ("voids"), welche beim Strecken der coextrudierten Folie entstanden sind. Das Strecken erfolgt dabei unter Temperaturbedingungen, bei denen die Polymermatrix der Basisschicht an der Oberfläche der inerten Teilchen aufreißt, was zu den freien, leeren, ungefüllten Räumen (Leerstellen, Mikrohohlräumen, Vakuolen) in der Folie führt. Durch die Erhöhung der Konzentration der Feststoffteilchen läßt sich die Zahl der Leerstellen vergrößern und damit die Dichte der Folie erniedrigen.

Die einzelnen Folienlagen des den erfindungsgemäßen Formkörper bildenden Preßlaminates zeigen gewöhnlich eine Dicke im Bereich von 10 bis 300, vorzugsweise 40 bis 200 Mikrometer. Die Dikke der Heißsiegelschicht überschreitet gewöhnlich 10 % der Dicke der Folie nicht und beträgt vorzugsweise 0,3 bis 5, insbesondere 0,5 bis 2,5 Mikrometer. Die Heißsiegelschicht befindet sich nur auf einer Oberfläche der Basisschicht, sofern beim Verpressen des Folienstapels zwischen Heißsiegelschicht und angrenzender Basisschicht der benachbarten Folie ein ausreichend fester Verbund entsteht. Gewöhnlich werden jedoch Folien mit beidseitiger Heißsiegelschicht verwendet.

Die Schichten der Folie enthalten gegebenenfalls zweckmäßige Additive wie Antioxidantien, Antistatika und/oder Stabilisatoren in jeweils wirksamer Menge.

Der an seiner Oberfläche strukturierte bzw. reliefartig ausgeformte plattenförmige Körper ist insbesondere geeignet als Dekor- und Reliefplatte für den Innenausbau, z.B. im Sanitärbereich (Duschkabinenwände), für die Möbelindustrie, für Fußbodenelemente oder für den Bau von Messeständen, für Außenanwendungen im Bauwesen, wie z.B. Fassadenverkleidungen, und im Fahrzeugbau, d.h. bei der Herstellung von Autos, Bussen, Eisenbahnwagen, Flugzeugen und Schiffen. Im Bedarfsfall wird die äußere Oberfläche mit einem feuerfesten, witterungsbeständigen und/oder chemikalienfesten Überzug versehen. Es ist auch möglich, in die Folien entsprechende Mittel, z.B. UV-Stabilisatoren, einzuarbeiten. Sofern erforderlich, wird der plattenförmige Körper mit einer Verstärkung versehen, z.B. durch Laminieren mit einer entsprechenden Platte oder Folie, z.B. aus Metall, Kunststoff oder Holz, oder einem Gewebe oder Vliesstoff, er kann aber auch als selbsttragende Platte verwendet werden.

Die Erfindung wird anhand der Figuren 1 bis 3 näher erläutert. Es zeigt

Figur 1 eine erfindungsgemäße Ausführungsform des plattenförmigen Körpers in Draufsicht.

Figur 2 die Ausführungsform der Figur 1 im vergrößerten Detail-Schnitt entlang der Linie II-II im vergrößerten Maßstab.

Figur 3 eine weitere Ausführungform im Schnitt.

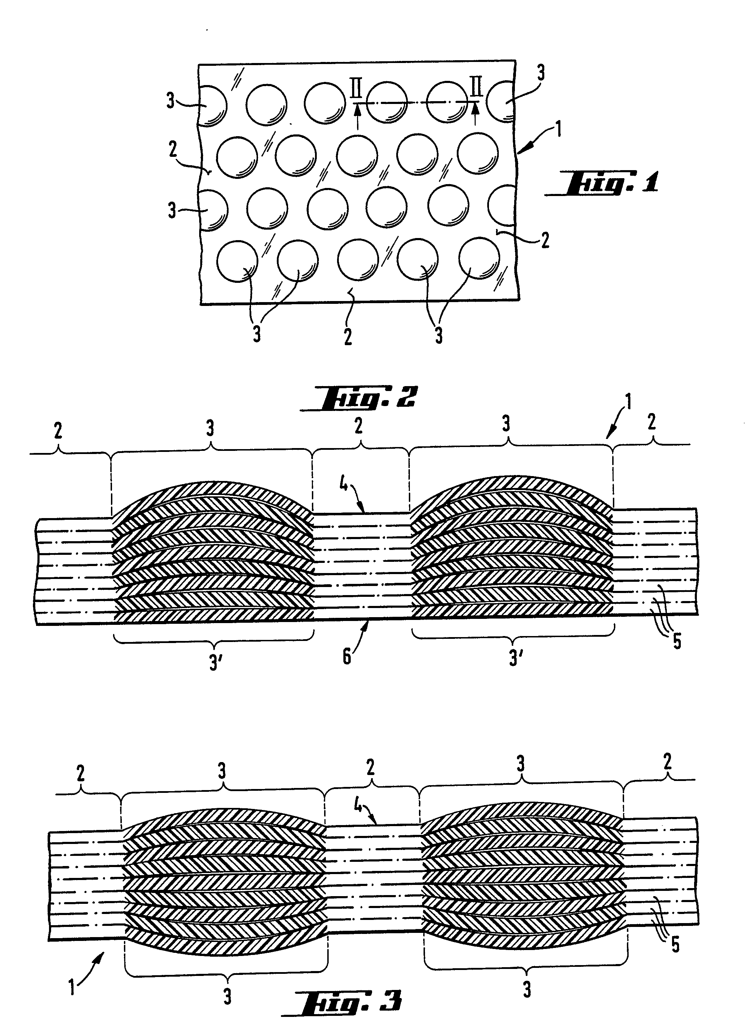

Der plattenförmige Körper 1 der Figur 1 besteht aus einer Vielzahl von übereinander angeordneten, biaxial orientierten Folien 5 (Fig. 2). Die Folien 5 bestehen aus einer (nicht gezeigten) Basisschicht und (nicht gezeigten) beidseitigen heißsiegelfähigen Deckschichten. Sie sind miteinander durch Verpressung bei erhöhter Temperatur verbunden. Als Formwerkzeug zur Erzielung der partiellen Verpressung dient im einfachsten Fall ein kommerziell erhältliches Lochblech aus Stahl mit runden Ausstanzungen. Entsprechend der Form der gewählten Preßmatrize weist der Körper 1 zu einer homogenen Polymermatrix verpreßte Bereiche 2 sowie unverpreßte Bereiche 3 auf, die - wie in Fig. 2 gezeigt -sich deutlich als Kugelsegmente aus der Oberfläche 4 des Körpers 1 herauswölben und der Oberfläche 4 eine reliefartige Struktur verleihen.

Aus Figur 2 wird der Schichtaufbau des Körpers 1 ersichtlich, der mit einer gelochten und mit einer ebenen, glatten unterbrechungsfreien Preßmatrix partiell verpreßt wurde. Der Körper 1 besteht aus einer Vielzahl von Folienlagen 5, einer ebenen, glatten Oberfläche 6 sowie einer parallel dazu verlaufenden Oberfläche 4, die in den Bereichen 3 Erhebungen aufweist. Die glatte Oberfläche 6 ist das Ergebnis der Auflage des Folienstapels auf den Preßstempel ohne Unterbrechungen, die Struktur der Oberfläche 4 resultiert aus dem Kontakt mit dem Lochblech. Beim Preßvorgang in einer Hydraulikpresse unter erhöhter Temperatur erfährt der zu verpressende Folienstapel in den Bereichen 2, die identisch sind mit den Stegen des Lochbleches, eine Komprimierung zur homogenen Polymermatrix. In den Bereichen 3, die mit den Stanzlöchern in der Preßmatrix übereinstimmen, kommt der Preßdruck nicht zur Wirkung, so daß dort der seine ursprüngliche Dicke beibehaltende Folienstapel scheinbar expandiert und beim Preßvorgang in die Stanzlöcher des Lochblechs ausweicht. Die Folienlagen sind im Bereich 3 nicht miteinander verbunden und wölben sich deutlich aus der Oberfläche 4 hervor. Auf der gegenüberliegenden Oberfläche 6 sind zwar keine entsprechenden Erhebungen vorhanden, jedoch zeigt auch diese Oberfläche im entsprechenden Bereich 3' eine verringerte Lichtdurchlässigkeit und erhöhten Glanz, so daß der Körper auch auf der glatten Oberfläche einen dekorativen Effekt zeigt.

Figur 3, in der die gleichen Bezugsziffern verwendet werden, zeigt den Schichtaufbau einer gegenüber der Ausführungsform der Figur 2 beidseitig profilierten Verbundplatte. Man erhält eine derartige Platte 1 durch beidseitiges Verpressen des Folienstapels mit jeweils einem Lochblech. Legt man identische Lochbleche absolut deckungsgleich auf den Folienstapel, so erhält man zwangsläufig Verbundkörper mit auf beiden Seiten identischen und deckungsgleichen Profilierungen. Seitliches Verschieben beider Lochbleche gegeneinander ermöglicht dagegen die Ausformung von "auf Lücke" gesetzten Strukturen auf beiden Formkörperoberflächen. Erfolgt der Preßvorgang mit zwei vollkommen unterschiedlich strukturierten Lochblechen, z.B. mit runden und quadratischen und/oder verschieden großen Ausstanzungen, lassen sich auch Körper mit verschiedenartig profilierten Oberflächen herstellen.

Es liegt im Rahmen der vorliegenden Erfindung, ohne deshalb detailliert beschrieben werden zu müssen, daß über die Auswahl geeigneter Preßformen, z.B. Positivmatrizen anstelle Negativmatrizen, beliebige Oberflächenprofilierungen möglich sind.

## Ansprüche

1. Hochfester plattenförmiger Körper, aufgebaut aus einer Vielzahl von übereinanderliegenden, miteinander fest verbundenen Folien aus thermoplastischem Kunststoff, dadurch gekennzeichnet, daß zumindest eine Oberfläche des Körpers eine Vielzahl von einzelnen Erhebungen aufweist, wobei der Körper in diesen Bereichen dieser Oberfläche eine größere Dicke besitzt und die einzelnen Folien in diesen Bereichen nicht miteinander verbunden sind.

2. Plattenförmiger Körper nach Anspruch 1, dadurch gekennzeichnet, daß seine beiden Oberflächen strukturiert sind und aus partiell verpreßten, vorzugsweise sich exakt deckenden Flächenbereichen bestehen, wobei sich die Erhebungen in den unverpreßten Flächenbereichen auf den beiden Oberflächen des Körpers befinden.

3. Plattenförmiger Körper nach Anspruch 1 oder 2, dadurch gekennzeichnet, daß der Anteil der unverpreßten Flächenbereiche auf ·der jeweiligen Oberfläche des plattenförmigen Körpers einen Wert von 70 %, insbesondere 60 %, bezogen auf diese Oberfläche des plattenförmigen Körpers, nicht überschreitet.

4. Plattenförmiger Körper nach einem der Ansprüche 1 bis 3, dadurch gekennzeichnet, daß er aus verpreßten, opaken Folien besteht.

5. Plattenförmiger Körper nach einem der Ansprüche 1 bis 4, dadurch gekennzeichnet, daß die Basisschicht der Folien aus thermoplastischem Kunststoff aus der Gruppe der Polyester, insbesondere Polyethylenterephthalat, der Polyolefine, insbesondere mit Propylen-Einheiten, Polystyrol, Polyamide, Polyvinylacetat oder Copolymeren oder Mischungen von diesen besteht, wobei die Folien eine bevorzugte Dicke von 10 bis 300, insbesondere 40 bis 200 Mikrometer aufweisen.

6. Verfahren zur Herstellung eines plattenförmigen Körpers nach einem der Ansprüche 1 bis 5, durch Verpressen eines Folienstapels aus übereinanderliegenden, thermoplastischen Kunststoffolien bei erhöhter Temperatur, dadurch gekennzeichnet, daß der Folienstapel zwischen zwei Preßformen gelegt wird, wovon zumindest eine eine Vielzahl von Ausnehmungen besitzt, in deren Bereich beim Preßvorgang kein Druck oder nur verringerter Druck auf die jeweilige Oberfläche des Folienstapels ausgeübt wird.

7. Verfahren nach Anspruch 6, dadurch gekennzeichnet, daß der Folienstapel zwischen zwei Preßformen mit Ausnehmungen gelegt wird, wobei die Strukturen beider Preßformen sich decken oder seitlich voneinander versetzt sind.

8. Verwendung von thermoplastischen Kunststoffolien aus einer Basisschicht und mindestens einer heißsiegelfähigen Oberflächenschicht zur Herstellung des plattenförmigen Körpers nach einem der Ansprüche 1 bis 5, dadurch gekennzeichnet, daß die Kunststoffolie in ihrer Basisschicht Partikel aus inertem Material enthält und vorzugsweise eine porige Struktur aufweist.

EP 0 353 608 A2

Fig: 1

Fig: 2

Fig: 3

HOECHST AKTIENGESELLSCHAFT
88/K 043